# EUROPÄISCHE PATENTSCHRIFT

(11) **EP 1 674 821 B1**
(45) Veröffentlichungstag und Bekanntmachung des Hinweises auf die Patenterteilung: **16.02.2011**
(21) Anmeldenummer: 04405794.1
(22) Anmeldetag: 21.12.2004
(51) Int. Cl.: G01B 5/00

(54) **Vorrichtung zum Positionieren von Messgeräten**
Apparatus for the positioning of measuring instruments
Dispositif pour le positionnement d'instruments de mesure

(43) Veröffentlichungstag der Anmeldung: 28.06.2006
(73) Patentinhaber: Hch. Kündig & Cie. AG, 8630 Rüti/ZH (CH)
(72) Erfinder: Glanzmann, Kurt, 8808 Pfäffikon / SZ (CH)
(74) Vertreter: Irsch, Manfred

(56) Entgegenhaltungen:
- GB-A- 2 119 309
- US-A1- 2001 007 173

## Beschreibung

Die Erfindung bezieht sich auf eine Vorrichtung zum Positionieren des Messorgans von Messgeräten nach dem Oberbegriff des unabhängigen Anspruchs 1.

Vorrichtungen zum Positionieren sind an sich bekannt. So offenbart z.B. die GB-A-2 119 309 eine Positioniereinrichtung auf welcher ein Instrument angeordnet ist, so dass das Instrument radial zur Bahn und entlang der Bahn bewegbar ist. Die US 2001/0007173 A1 offenbart eine Vorrichtung zum Positionieren eines Messinstruments auf einer einteiligen Traverse, die auf einer kreisförmigen Bahn bewegbar angeordnet ist.

Derartige Vorrichtungen werden beispielsweise verwendet, Messgeräte zum Bestimmen und Überwachen der Dicke von Kunststoff bei der Herstellung dieser Folien gegenüber dem Messgut zu positionieren. Kunststoff werden z.B. als Schlauch extrudiert und zu einer Blase aufgeblasen, deren Umfang der Folienbreite entspricht, welche produziert werden soll. Dieses Verfahren wird Blasfolienextrusion genannt. Um die Folienblase aus Kunststoff ist, in Bewegungsrichtung der Blase betrachtet, kurz nach dem Extruder eine bogenförmige oder ringartige Bahn, möglichst konzentrisch zur Blase aus Kunststofffolie angeordnet. Auf dieser Bahn ist z.B. auf Drehschemeln eine Traverse angeordnet, auf welcher das Messorgan, bzw. der Messkopf und in der Regel auch andere Teile der Messeinrichtung montiert sind. Durch das Bewegen der Drehschemel auf der Bahn, kann der Messkopf mit dem Messorgan entlang der Bahn in einem einstellbaren Abstand positioniert und geführt werden. Bei einer kreisförmigen Bahn heisst dies, dass das Messorgan radial und winkelmässig positioniert und geführt wird. Damit ist es möglich, den Messkopf radial korrekt gegenüber dem Messgut z.B. der Folienblase, zu positionieren und z.B. in korrektem Abstand über den Umfang des Messguts herum zu führen.

Das Messorgan der Messeinrichtung überwacht die Dicke einer Kunststofffolie nur auf einer Breite von wenigen Millimetern oder Zentimetern. Die Dicke von Kunststofffolien ändert in der Regel in Laufrichtung, bzw. in der Produktionsrichtung nur wenig und nicht plötzlich und kurzzeitig sehr stark. Unterschiede in der Dicke von Folien über den Umfang einer extrudierten Folienblase sind wesentlich häufiger als solche entlang der Folienblase. Es sind also vor allem Unterschiede in der Dicke quer zur Laufrichtung der extrudierten Folie, im sog. Querprofil zu erkennen. So genügt es in den meisten Fällen, den Messkopf z.B. periodisch über den Umfang der Folienblase zu bewegen um Fehler in der Dicke des Blase zu erkennen. Wenn der Messkopf auf der ringförmigen Bahn hin und her um die extrudierte Blase bewegt wird, spricht man von reversieren. Der Messkopf kann die Folienblase auf der Bahn auch kontinuierlich umkreisen.

Diese Hin- und Herbewegung der Messeinrichtung über den Umfang der Blase oder die Umlaufbewegung um diese herum, kann auf verschiedene Arten erreicht werden. Auf der schienenartigen Bahn, kann beispielsweise ein Wagen angeordnet sein, auf welchem die Messeinheit befestigt ist. Der Wagen kann selbstfahrend oder sonst irgendwie angetrieben sein, z.B. mit einem umlaufenden Seil oder Riemen. Für die Übertragung der Messsignale, Steuersignale und/oder die Energieversorgung von Messeinheit und Antrieb können flexible Kabel oder Schleifkontakte wie Schleifringe vorgesehen sein. Messsignale und Steuersignale können auch drahtlos übermittelt werden.

In EP 1 116 931 A1 ist eine Vorrichtung zum Positionieren von Messorganen beschrieben, bei welcher eine starre Traverse auf zwei beispielsweise angetriebenen Drehschemein verschiebbar gelagert und von diesen getragen wird. Die Drehschemel laufen auf einer beispielsweise kreisförmigen Schienenbahn und können sich auf dieser Bahn zueinander hin, voneinander weg oder gleich bewegen. Bei gleicher Bewegung der beiden Drehschemel bewegt sich die Traverse und insbesondere das Messorgan auf der Traverse kreisförmig. Durch das Verschieben der Drehschemel zueinander hin oder voneinander weg, wird der Radius, der Kreisbahn, auf welcher sich die Traverse und das Messorgan bewegen verändert.

Die Länge der Traverse ist z.B. bei einer kreisförmigen Schienenbahn durch den radialen Bereich in welchem das Messorgan positioniert werden soll bestimmt. Dies hat zur Folge, dass die Traverse bei Positionen des Messorgans auf grossen Radien, also nahe der Schienenbahn, mit ihren Enden ausserhalb der Schienenbahn übersteht. Dies macht zusätzlichen Platzbedarf für die Positioniervorrichtung erforderlich. In vielen Fällen ist der zusätzlich erforderliche Platz gar nicht vorhanden.

Auf die Traverse kann auch verzichtet werden. Bei einer solchen Lösung ist auf einem Laufwagen eine radial ausgerichtete Teleskopstange montiert. Auf der Teleskopstange ist das Messorgan angeordnet und mit der Teleskopstange radial verschiebbar und positionierbar. Eine solche Lösung ist bei einem grossen Verstellbereich von 1 m bis 3 m nicht sehr stabil. Es besteht die Gefahr, dass unerwünschte Schwingungen auftreten. Bei grosser Länge der Teleskopstange, wird das Drehmoment, welches sie auf den Laufwagen ausübt gross. Diese Mängel können nur mit grossem, aus wirtschaftlichen Gründen meist nicht vertretbarem Konstruktionsaufwand beseitigt werden.

Die vorliegende Erfindung schafft eine verbesserte Vorrichtung zum Positionieren eines oder mehrerer Messorgane, welche bei gleichen oder ähnlich vielseitigen Möglichkeiten der Positionierung der Messorgane geringeren Platz- und Raumbedarf hat.

Erfindungsgemäss weist die Vorrichtung zum Positionieren von Messgeräten die Merkmale des kennzeichnenden Teils des unabhängigen Anspruchs 1 auf. Die abhängigen Ansprüche beziehen sich auf vorteilhafte Weiterbildungen der Erfindung.

Die Erfindung betrifft somit eine Vorrichtung zum Positionieren des Messorgans einer Messeinrichtung mit einer Traverse, auf welcher das Messorgan angeordnet ist, und mit einer ringförmigen oder bogenförmigen Bahn, sowie auf der Bahn bewegbaren Lagern, auf denen die Traverse gelagert ist und das Messorgan der Messeinrichtung radial zur Bahn und entlang der Bahn positionierbar ist. Dabei ist die Traverse mehrteilig ausgebildet und die Teile der Traverse sind mit einem oder mehreren Lagern miteinander verbunden. Gemäss der Erfindung sind die Teile der Traverse auf der Bahn derart bewegbar dass die auf der Bahn bewegbaren Lager auf der Bahn zueinander hin, voneinander weg sowie gleichsinnig, mit gleicher oder verschiedener Geschwindigkeit bewegbar sind, oder dass die Teile der Traverse, teleskopisch verschiebbar ineinander gelagert sind, und die bewegbaren Lager zwischen Bahn und Traverse zueinander hin, voneinander weg, sowie gleichsinnig, mit gleicher oder verschiedener Geschwindigkeit bewegbar sind.

Wenn in den Patentansprüchen die Rede von mehrteiligen Traversen die Rede ist, so ist damit der eigentliche Balken der Traverse gemeint und bezeichnet. Es sind mit dem Begriff "mehrteilige Traverse" z.B. nicht ein die Traverse bildender Trägerbalken aus einem Stück und Verbindungsteile wie Lager zwischen der traverse und dem Drehschemel gemeint. Teile, die an der traverse angebracht sind, wie etwa die Plattform, Teile des Antriebs, Kabel u.s.w. sind gemäss dieser Definition der Traverse also nicht Teile der Traverse, bzw. des Balkens. Die neue Vorrichtung zum Positionieren von Messgeräten weist eine Traverse auf, die auf Lagern abgestützt ist, welche sich auf einer Bahn bewegen. Die Traverse ist im Bereich ihrer beiden Enden auf diesen Lagern, beispielsweise Drehschemeln, abgestützt und mit einem Drehlager verbunden. Die Traverse weist zwischen diesen Drehlagern, mit Vorteil z.B. in ihrer Mitte, ein Dreh- oder Biegelager auf. Sie also im Unterschied zu bekannten Traversen nicht starr, sondern als Gelenktraverse ausgebildet. Im Bereich des Gelenks der Traverse kann eine Plattform vorgesehen sein, welche das Messorgan und eventuell andere Komponenten einer oder mehrerer Messvorrichtungen trägt. So kann beispielsweise eine Vorrichtung zum Messen des Abstands vom Messgut z.B. Kunststofffolie und eine Vorrichtung zum Messen der Dicke des Messguts also der Kunststofffolie vorgesehen sein. Die Verbindung der Plattform mit der Traverse ist so konstruiert, dass die darauf angebrachten Messorgane beispielsweise unabhängig vom Winkel zwischen den Traverseteilen auf beiden Seiten des Lagers immer radial oder in einer anderen gewünschten Richtung ausgerichtet sind. Es ist auch möglich, die Ausrichtung der Plattform mit einem Antrieb einzustellen.

An Stelle eines Drehgelenks könnte auch ein Biegelager, also z.B. ein Blatt aus Federstahl die beiden Teile der Traverse gelenkig verbinden. Oder die Traverse könnte von einem Federstahlblatt gebildet werden, das an den beiden Enden gefasst ist und die Fassung an den beiden Enden über je ein Drehlager mit einem der Drehschemel verbunden ist. In diesem Fall würde der grösste Teil der Traverse zwischen den beiden Drehlagern vom Biegelager selbst gebildet.

Die beiden Teile welche durch das Lager verbunden sind können vorzugsweise zusammen einen stumpfen, gestreckten oder überstumpfen Winkel bilden. Es ist aber keineswegs ausgeschlossen, dass die beiden Teile auch eine recht-oder eine spitzwinklige Lage einnehmen könnten. So kann durch das Vergrössern des Abstands der beiden Drehschemel und das nachfolgende wieder Verkleinern des Abstands mit der Traverse nach der Erfindung ein grosser radialer Bereich für das Positionieren abgedeckt werden.

Die Lager mit denen der Bereich der Enden der Traverse mit den Wagen, bzw. Drehschemeln verbunden und darauf gelagert ist, müssen wie das Lager zwischen den Teilen der Traverse möglichst spielfrei konstruiert sein, um eine exakte Positionierung zu gewährleisten. Um die Kräfte und Momente welche durch die Traverse auf die Lager ausgeübt werden niedrig zu halten, kann die Traverse in Leichtbauweise ausgeführt, z.B. eine faserverstärkte Wabenkonstruktion oder eine Verbundkonstruktion sein. Eine geschäumte Verbundkonstruktion würde sich ebenso eignen.

Die Drehschemel auf denen die Traverse drehbar gelagert ist, sind auf den Schienen der Bahn geführt und auch gegen das Abheben von der Schiene gesichert. Beispielsweise kann der Drehschemel auf den Schienen durch vier Räderpaare festgehalten und geführt sein. Jedes dieser Räderpaare besteht aus einem oben und einem unten an der Schiene geführten Rad.

Um die radiale Position der Plattform mit den Messorganen einzustellen ist es ausreichend, wenn die Drehlage des einen Teils der Traverse mit einem Stellantrieb eingestellt wird. Der Stellantrieb weist z.B. einen Hebel auf, der an diesem Teil der Traverse angreift und die Winkellage der Traverse bestimmt. Der Vorwärts-Rückwarts-Antrieb des Hebels kann mit einem Spindelantrieb, hydraulisch, elektromagnetisch oder sonst wie erfolgen. Die Winkellage und der Antrieb nur des einen Teils der Traverse, wenn möglich in Verbindung mit einer Bewegung des Wagens bzw. Drehschemels auf der Schiene ermöglicht das exakte Positionieren des oder der Messorgane in radialer Richtung. Für die Bewegung der beiden Drehschemel mit der Traverse und der Messeinrichtung ist es meist ausreichend, wenn der eine der beiden Drehschemel angetrieben ist. Der zweite Drehschemel wird über die Traverse vom ersten, angetriebenen Drehschemel gezogen bzw. gestossen. Die Stromversorgung kann auch bei der Ausführung nach der Erfindung beispielsweise über eine Stromschiene und Abnehmer oder über Kabel erfolgen. Die Signalübertragung kann ebenfalls über eine Stromschiene, drahtlos oder über Kabel erfolgen.

Bei der neuen Vorrichtung nach der Erfindung, mit der Traverse, die ein Gelenk aufweist, wird das Überragen der Bahn nach aussen durch die Traverse vermieden. Das radiale Verstellen und Positionieren erfolgt durch Drehbewegungen der Teile der Traverse. Es ist nicht erforderlich, dass beide Drehschemel einzeln angetrieben werden. Der Antrieb eines der beiden Drehschemel genügt. Der zweite Drehschemel wird über die Traverse auf der Bahn bewegt, d.h. gestossen oder gezogen. Weil die Länge der Traverse sich nicht ändert wird die Verkabelung in der Traverse wesentlich vereinfacht. Es sind keine sog. Energieversorgungsketten notwendig, da sich die Enden der Traverse auf den Drehschemeln nicht mehr längs verschieben. Die im Betrieb erfolgenden Winkeländerungen haben Biegungen zur Folge, die einfache, flexible Kabel ohne weiteres ertragen.

Die Erfindung wird im Folgenden anhand der schematischen Zeichnungen , welche Ausführungsbeispiele der Erfindung und Einzelheiten davon zeigen, näher erläutert.
- Fig. 1: zeigt in einer perspektivische Aufsicht einen Teil einer Vorrichtung zum Positionieren mit einer kreisförmigen Bahn, und mit der Traverse in einer Position, bei welcher die Teile der Traverse miteinander einen überstumpfen Winkel bilden.
- Fig. 2: zeigt in einer perspektivische Aufsicht einen Teil einer Vorrichtung zum Positionieren mit einer kreisförmigen Bahn, und mit der Traverse in einer Position, bei welcher die Teile der Traverse miteinander einen stumpfen Winkel bilden.

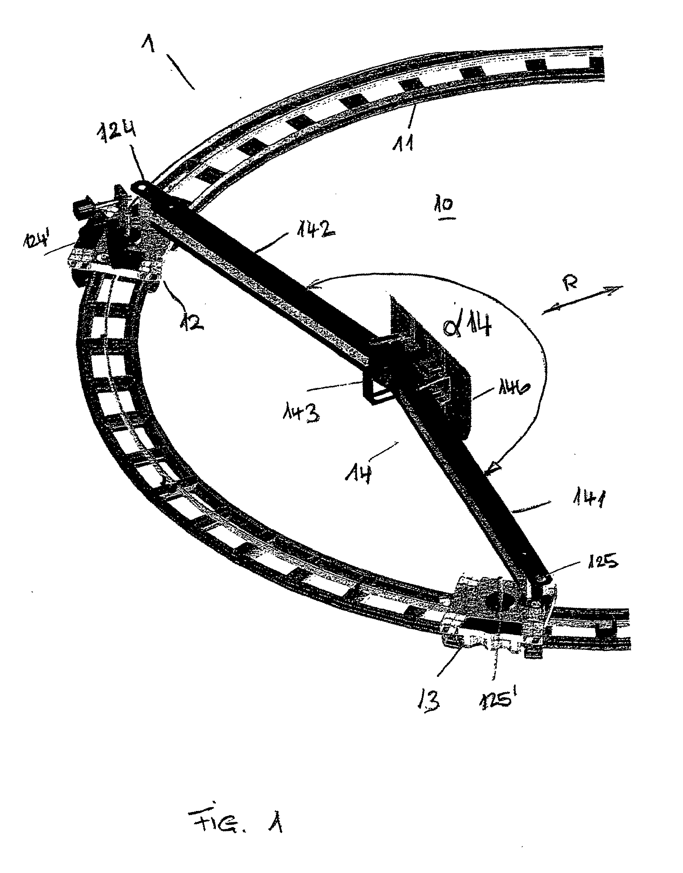

Die in Fig. 1 gezeigte Vorrichtung zum Positionieren von Messgeräten 1 besteht aus einer Traverse 14 mit den beiden Teilen 141 und 142. Die Traverse 14 ist auf den beiden Drehschemeln 12 und 13 drehbar abgestützt und gelagert und wird von diesen beiden Drehschemeln 12 und 13 getragen. Die Bahn für die beiden Drehschemel 12 und 13 ist kreisförmig. Die beiden z.B. gleichlangen Teile 141 und 142 der Traverse 14, sind mit dem Drehlager, bzw. Drehgelenk 143 miteinander verbunden. Bei der Traverse 14 erfolgt die Einstellung des Winkels α14, der hier überstumpf gezeigt ist, mit einem Drehantrieb (nicht gezeigt) im Lager 124, bzw. im Lager 125. Der Antrieb für das Einstellen des Winkels α14 könnte auch im Lager vorgesehen sein. Die Einstellung des Winkels α14 kann auch mit einem Linearantrieb erfolgen, der ausserhalb des Drehpunkts an der Traverse oder an der Verlängerung der Traverse über das Drehlager hinaus angreift.

In Fig. 1 ist die Traverse 14 in den Lagern 124 und 125 auf den Drehschemeln 12 und 13 abgestützt und drehbar gelagert, gezeigt. Die Traverse 14 kann natürlich auch in der Position der schematisch gezeigten Stifte 124' und 125' auf den Drehschemeln 12 und 13 abgestützt und drehbar gelagert sein. Auch bei einer derartigen Ausführungsform kann beispielsweise eines der Drehlager über einen Antrieb verfügen, mit welchem der Winkel α14 wählbar eingestellt werden kann. Der Antrieb zum Einstellen des Winkels α14 könnte aber auch im Lager 143 angeordnet sein.

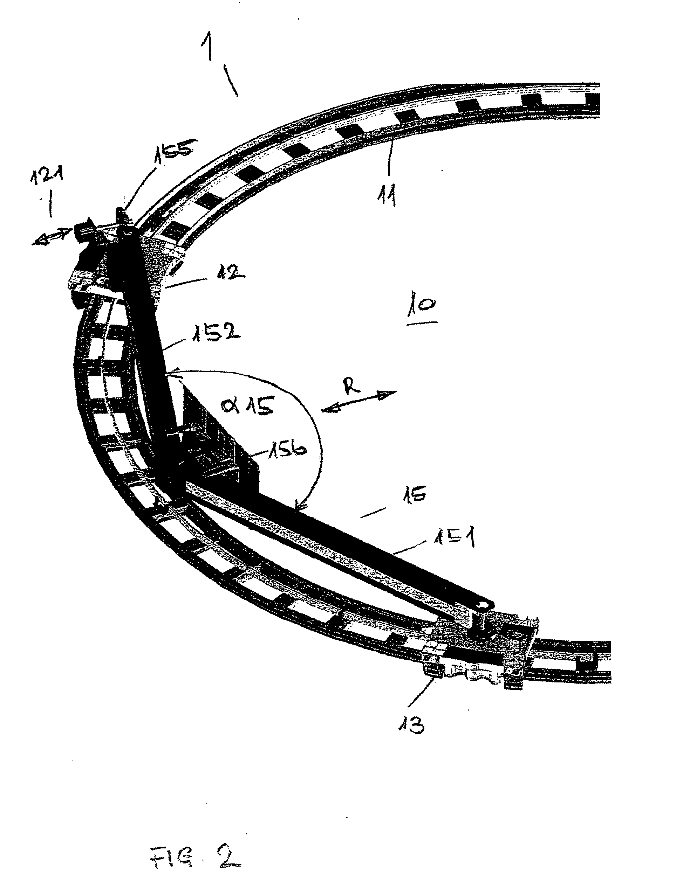

Die in Fig. 2 gezeigte Vorrichtung zum Positionieren von Messgeräten 1 besteht aus der Traverse 15 mit den beiden Teilen 151 und 152, die auf den beiden Drehschemeln 12 und 13 drehbar abgestützt und gelagert sind. Die Traverse wird von diesen beiden Drehschemeln 12 und 13 getragen. Die Einstellung des hier stumpfen Winkels α15 erfolgt mit dem schematisch als doppelter Pfeil 121 dargestellten Linearantrieb, der mit der Verlängerung 155 des Teils 152 der Traverse 15 verbunden ist. Das Einstellen des Winkels α15 und damit auch der radialen Position der Plattform 156 mit dem Messorgan (nicht gezeigt) erfolgt durch Vor- und Rückwärtsbewegung des Linearantriebs 121. Dieser Linearantrieb kann beispielsweise ein Gewindespindelantrieb, ein fluidbetriebener Kolben mit Kobenstange oder ein elektrischer Linearmotor sein.

Das Messgut (nicht gezeigt), z.B. eine Folienblase aus einer Folie aus Kunststoff, von welcher die Dicke, sowie der Abstand eines Messorgans zur Folienblase gemessen und überwacht werden sollen, läuft durch das Innere 10 der kreisförmigen Bahn 11. Je nach der Grösse des Durchmessers der Blase ist die Lage des Messorgans oder der Messorgane gegenüber der Blase anzupassen und einzustellen. Dies erfolgt so, dass der Winkel α14 bzw. α15 der beiden Teile der Traverse 14, bzw. 15 verändert wird. Die Plattform 146 bzw. 156 ist so konstruiert, dass ihre nach innen gerichtete Platte unabhängig vom Winkel α14 bzw. α15 immer radial nach innen gerichtet bleibt. Die Plattform könnte aber auch so konstruiert sein, dass die Ausrichtung der Platte eingestellt werden kann.

In den dargestellten Beispielen ist es ausreichend wenn nur der eine der beiden Drehschemel 12 oder 13 für Bewegungen auf der Schienenbahn 11 angetrieben ist. Der zweite Drehschemel wird vom ersten mit der Traverse gezogen oder gestossen. Die gegenseitige Lage der beiden Drehschemel wird mit der Winkelstellung der beiden Teile der Traverse bestimmt bzw. verändert.

Die Bahn kann auf Stützen stehen (nicht gezeigt) oder z.B. an einer Decke oder in einem Fachwerkgerüst aufgehängt sein. In Fig. 1 und Fig. 2 sind die Drehschemel 12, 13 so dargestellt, dass sie auf den Schienen der Schienenbahn 11 stehen. Die Drehschemel 12, 13 könnten aber auch unter der Schienenbahn 11, an den Schienen hängend ausgeführt sein.

Die in den Figuren gezeigten Beispiele zeigen zweiteilige Traversen 14, 15. Die Traversen könnten aber auch drei oder mehr Teile aufweisen, die gelenkig miteinander verbunden sind. Die radiale Position der Plattform 146, bzw. 156 wird mit der Veränderung des Winkels α14, bzw. α15 verändert und eingestellt, was mit dem Doppelpfeil R veranschaulicht ist.

In einer anderen Ausführungsform der Erfindung, kann an Stelle des Drehgelenks, welches die Teile der mehrteiligen Traverse, gelenkig verbindet, ein Biegegelenk aus z.B. Federstahl verwendet werden. In einer weiteren Ausführungsform der Vorrichtung zum Positionieren von Messgeräten nach der Erfindung, könnte an Stelle der Knicktraverse mit dem Gelenk zwischen den Teilen der Traverse eine teleskopartige Traverse verwendet werden, die mit jedem Ende je auf einem der Drehschemel abgestützt und drehbar gelagert ist. Die Traverse bildet damit eine Sehne der Schienenbahn 11. Durch ineinanderschieben bzw. auseinanderfahren der die Teleskoptraverse bildet die Traverse Sehnen die radial weiter aussen bzw. radial weiter innen durch den Innenraum verlaufen. Damit kann die radiale Position einer Plattform auf der Teleskoptraverse verändert und eingestellt werden. Die Teile der Teleskoptraverse können einen beliebigen Querschnitt wie kreisförmig, elliptisch, vieleckig u.s.w. aufweisen.

Der mittlere Teil der Teleskoptraverse trägt das Messorgan. Wenn beispielsweise eine Folienblase überwacht und gemessen wird, ist mit der Konstruktion der Teleskoptraverse sicherzustellen, dass der mittlere Teil immer genau zwischen den beiden Drehschemeln positioniert bleibt und das Messorgan genau auf die Mitte der zu messenden Folienblase ausgerichtet bleibt.

Die Vorrichtung 1 zum Positionieren des Messorgans einer Messeinrichtung, weist eine Traverse 14 auf, auf welcher das Messorgan angeordnet ist. Die Vorrichtung weist weiter eine Bahn 11 auf, auf welcher Lager 12, 13 fahren und auf welchen die Traverse 14 mit Lagern 124, 125 gelagert ist. Das Messorgan der Messeinrichtung ist radial zur Bahn 11 und entlang der Bahn 11 positionierbar. Die Traverse 14 ist mehrteilig ausgebildet und die Teile 141, 142 der Traverse 14 sind mit einem oder mehreren Lagern 143 miteinander verbunden oder die Teile 141, 142 der Traverse 14 sind teleskopisch verschiebbar ineinander gelagert. Das radiale Positionieren erfolgt indem der Winkel α14 zwischen den Teilen 141, 142 der Traverse 14 verändert wird oder indem bei einer teleskopischen Traverse 14, welche eine Sehne in der Bahn 11 bildet, die Länge verändert wird.

## Patentansprüche

1. Vorrichtung (1) zum Positionieren eines Messorgans einer Messeinrichtung mit einer Traverse (14), auf welcher das Messorgan anordenbar ist, und mit einer ringförmigen oder bogenförmigen Bahn (11), sowie auf der Bahn (11) bewegbaren Lagern (12, 13), auf denen die Traverse (14) gelagert ist und das Messorgan der Messeinrichtung radial zur Bahn (11) und entlang der Bahn (11) positionierbar ist, wobei die Traverse (14) mehrteilig ausgebildet ist und die Teile (141, 142) der Traverse (14) mit einem oder mehreren Lagern (143) miteinander verbunden sind, **dadurch gekennzeichnet, dass** die Teile (141, 142) der Traverse (14) auf der Bahn (11) bewegbar sind, derart, dass die auf der Bahn (11) bewegbaren Lager (12, 13) auf der Bahn (11) zueinander hin, voneinander weg sowie gleichsinnig, mit gleicher oder verschiedener Geschwindigkeit bewegbar sind, oder dass die Teile (141, 142) der Traverse (14), teleskopisch verschiebbar ineinander gelagert sind, und die bewegbaren Lager (12, 13) zwischen Bahn (11) und Traverse (14) zueinander hin, voneinander weg, sowie gleichsinnig, mit gleicher oder verschiedener Geschwindigkeit bewegbar sind.

2. Vorrichtung nach Anspruch 1, bei welcher die Teile (141, 142) der Traverse (14) mit einem Dreh- (143) oder Biegelager verbunden sind.

3. Vorrichtung nach Anspruch 1 oder 2, bei welcher das Dreh- (143) oder Biegelager zwischen den Teilen (141, 142) der Traverse (14) Winkellagen im Bereich spitzer, und/oder stumpfer, und/oder gestreckter und/oder überstumpfer Winkel (α14) zulässt.

4. Vorrichtung nach einem der Ansprüche 1 bis 3, bei welcher die auf der Bahn (11) bewegbaren Lager (12, 13) zwischen Bahn (11) und Traverse (14) Drehschemel sind, die auf der Bahn (11) zueinander hin, voneinander weg sowie gleichsinnig, mit gleicher oder verschiedener Geschwindigkeit bewegbar sind.

5. Vorrichtung nach einem der Ansprüche 1 bis 4, bei welcher die Traverse (14) im Bereich ihrer beiden Enden mit Drehlagern (124, 125) mit den auf der Bahn (11) bewegbaren Lagern, bzw. mit den Drehschemeln (12, 13) verbunden ist.

6. Vorrichtung nach einem der Ansprüche 1 bis 5, mit einer Traverse (14), mit einem einzigen Dreh- (143) oder Biegelager zwischen den auf der Bahn (11) bewegbaren Lagern bzw. Drehschemeln (12, 13)und mit einem Stellmotor und Hebelantrieb zum Einstellen des Winkels (α14) zwischen den mit dem Dreh- (143) oder Biegelager verbundenen Teile (141, 142) der Traverse (14).

7. Vorrichtung nach einem der Ansprüche 1 bis 6, bei welcher mindestens eines der auf der Bahn (11) bewegbaren Lager, bzw. einer der Drehschemel (12, 13) einen Antriebsmotor, vorzugsweise einen Elektromotor aufweist um beide bewegbaren Lager, bzw. Drehschemel (12, 13) mit der Traverse (14) und mit dem Messorgan entlang der Bahn (11) zu bewegen.

8. Vorrichtung nach einem der Ansprüche 1 bis 7, mit einem Trägerarm auf welchem das Messorgan der Messeinheit anordenbar ist, und der auf der Traverse (14) montiert ist und der Trägerarm mit dem darauf anordenbaren Messorgan, in einer vorgegebenen Richtung, vorzugsweise in radialer Richtung zur Bahn (11) verschoben oder teleskopisch verlängert, bzw. verkürzt werden kann.

9. Vorrichtung nach einem der Ansprüche 1 bis 8 mit einer Messeinheit zum Messen der Dicke von Kunststofffolien, mit einem Messorgan das kapazitiv, optisch, thermisch, akustisch oder mit radioaktiver Strahlung, insbesondere β-Strahlung oder γ-Strahlung arbeitet.

10. Vorrichtung nach einem der Ansprüche 1 bis 9, bei welcher die Einstellung der Position der Messsonde gegenüber dem zu messenden Objekt mit einer Vorrichtung erfolgt, die den Abstand mit einem Ultraschallsensor oder mit einem Staudrucksensor bestimmt.

11. Vorrichtung nach einem der Ansprüche 1 bis 10, bei welcher die Übertragung von Mess- und Steuersignalen von und zur Messeinheit aufmoduliert auf die Speisespannung über die Speiseleitung und/oder über separate Signalleitungen und/oder drahtlos erfolgt.

12. Vorrichtung nach einem der Ansprüche 1 bis 11, bei welcher die Übertragung der elektrischen Speisung und/oder von Mess- und Steuersignalen, von bzw. zur bewegbaren Messeinheit wenigstens teilweise über Schleifkontakte erfolgt.

## Claims

1. Device (1) for positioning a measuring element of a measuring apparatus, comprising a traverse (14) on which the measuring element is arrangeable, and comprising an annular or arcuate track (11) as well as bearings (12, 13) that are movable on the track (11), on which bearings (12, 13) the traverse (14) is held, and the measuring element of the measuring apparatus can be positioned radially in relation to the track (11) and along the track (11), wherein the traverse (14) comprises multiple components, and the components (141, 142) of the traverse (14) are interconnected with one or several bearings (143), **characterized in that** the components (141, 142) of the traverse (14) are movable on the track (11) in such a way that the bearings (12, 13) being movable on the track (11) can be moved on the track (11) towards each other, away from each other as well as in unison with each other, at identical speed or at a different speed, or that the components (141, 142) of the traverse (14) are held inside each other so as to be telescopically slidable, and the moveable bearings (12, 13) are movable between the track (11) and the traverse (14) towards each other, away from each other, as well as in unison with each other, at identical speed or at a different speed.

2. Device according to claim 1, in which the components (141, 142) of the traverse (14) are connected to a pivot bearing (143) or bending bearing.

3. Device according to claim 1 or 2, in which the pivot bearing (143) or bending bearing between the components (141, 142) of the traverse (14) permits angular positions in the region of acute and/or obtuse angles and/or straight angle and/or reflex angles (α14).

4. Device according to anyone of claim 1 to 3, in which the bearings (12, 13) that are movable on the track (11) between the track (11) and the traverse (14) are pivoted bolsters which can be moved on the track (11) towards each other, away from each other as well as in unison with each other, at identical speed or at a different speed.

5. Device according to anyone of claim 1 to 4, in which the traverse (14) in the region of its two ends with pivot bearings (124, 125) is connected to the bearings movable on the track (11) or is connected to the pivoted bolsters (12, 13).

6. Device according to anyone of claim 1 to 5, comprising a traverse (14) with a sole pivot bearing (143) or bending bearing between the bearings or pivoted bolsters (12, 13) that are movable on the track (11), and comprising a servomotor and lever drive for setting the angle (α14) between the components (141, 142) of the traverse (14), which components are connected to the pivot bearing (143) or bending bearing.

7. Device according to anyone of claim 1 to 6, in which at least one of the bearings that are movable on the track (11) or at least one of the pivoted bolsters (12, 13) comprises a drive motor, preferably an electric motor, in order to move both movable bearings or pivoted bolsters (12, 13) with the traverse (14) and with the measuring element along the track (11).

8. Device according to anyone of claims 1 to 7, comprising a carrier arm on which the measuring element of the measuring unit is arrangeable, wherein said carrier arm is installed on the traverse (14), and wherein said carrier arm with the measuring element being arrangeable thereon can be slid or telescopically extended or retracted in a specifiable direction, preferably in radial direction in relation to the track (11).

9. Device according to anyone of claim 1 to 8, comprising a measuring unit for measuring the thickness of plastic film, comprising a measuring element which operates capacitively, optically, thermally, acoustically or with the use of radioactive radiation, in particular β-radiation or γ-radiation.

10. Device according to anyone of claims 1 to 9, wherein the adjustment of the position of the measuring probe with respect to the object to be measured is made with a device which detects the distance with an ultrasonic sensor or with a back pressure sensor.

11. Device according to anyone of claims 1 to 10, wherein the transmission of measuring and control signals from and to the measuring unit is carried out over the feeder by modulation onto the supply voltage and / or over separate signal lines and / or wireless.

12. Device according to anyone of claims 1 to 11, wherein the transmission of the electrical supply and / or of measuring and control signals from and to the moveable measuring unit is at least partly carried out over sliding contacts.

## Revendications

1. Dispositif (1) pour positionner un organe de mesure d'un dispositif de mesure comprenant une traverse (14), sur laquelle l'organe de mesure peut être disposé, et une bande (11) de forme annulaire ou arquée, et des paliers (12, 13) déplaçables sur la bande (11), sur lesquels la traverse (14) est montée et l'organe de mesure du dispositif de mesure pouvant être positionné radialement à la bande (11) et le long de la bande (11), la traverse (14) étant conçue en plusieurs parties et les parties (141, 142) de la traverse (14) étant relies les unes aux autres avec un ou plusieurs paliers (143), **caractérisé en ce que** les parties (141, 142) de la traverse (14) peuvent se déplacer sur la bande (11), de telle sorte que les paliers (12, 13) déplaçables sur la bande (11) peuvent se déplacer sur la bande (11) les uns en direction des autres, les uns à partir des autres et dans le même sens, avec une vitesse identique ou différente ou **en ce que** les parties (141, 142) de la traverse (14) sont montées de façon à coulisser de façon télescopique les unes dans les autres, et **en ce que** les paliers (12, 13) mobiles peuvent se déplacer entre le bande (11) et la traverse (14) les uns vers les autres, les uns à partir des autres, et dans le même sens, avec une vitesse identique ou différente.

2. Dispositif selon la revendication 1, sur lequel les parties (141, 142) de la traverse (14) sont reliées avec un palier rotatif (143) ou un palier élastique.

3. Dispositif selon la revendication 1 ou 2, sur lequel le palier rotatif (143) ou le palier élastique autorise entre les parties (141, 142) de la traverse (14) des positions d'angle dans la plage d'angles (α14) aigus et/ou obtus et/ou étirés et/ou concaves.

4. Dispositif selon l'une quelconque des revendications 1 à 3, sur lequel les paliers (12, 13) mobiles sur la bande entre la bande (11) et la traverse (14) sont des chariots orientables qui peuvent se déplacer sur la bande (11) les uns en direction des autres, les uns à partir des autres et dans le même sens, avec une vitesse identique ou différente.

5. Dispositif selon l'une quelconque des revendications 1 à 4, sur lequel la traverse (14) est reliée dans la zone de ses deux extrémités avec paliers tournants (124, 125) aux paliers mobiles sur la bande (11) ou aux chariots orientables (12, 13).

6. Dispositif selon l'une quelconque des revendications 1 à 5, comprenant une traverse (14), un unique palier rotatif (143) ou palier élastique entre les paliers ou chariots orientables (12, 13) mobiles sur la bande (11) et un servomoteur et un entraînement par levier pour le réglage de l'angle (α14) entre les parties (141, 142) de la traverse (14) qui sont reliées au palier rotatif (143) ou au palier flexible.

7. Dispositif selon l'une quelconque des revendications 1 à 6, sur lequel au moins l'un des paliers mobiles sur la bande (11) ou l'un des chariots orientables (12, 13) présente un moteur d'entraînement, de préférence un moteur électrique pour déplacer les deux paliers mobiles ou chariots orientables (12, 13) avec la traverse (14) et avec l'organe de mesure le long de la bande (11).

8. Dispositif selon l'une quelconque des revendications 1 à 7, comprenant un bras support sur lequel l'organe de mesure de l'unité de mesure peut être disposé, et qui est monté sur la traverse (14) et le bras support pouvant être déplacé avec l'organe de mesure pouvant être disposé dessus, dans une direction prédéfinie, de préférence dans la direction radiale par rapport à la bande (11), ou rallongé de façon télescopique ou raccourci.

9. Dispositif selon l'une quelconque des revendications 1 à 8 comprenant une unité de mesure pour la mesure de l'épaisseur de films plastique, un organe de mesure qui travaille de façon capacitive, optique, thermique, acoustique ou avec un rayonnement radioactif,; en particulier un rayonnement β ou un rayonnement γ.

10. Dispositif selon l'une quelconque des revendications 1 à 9, sur lequel le réglage de la position de la sonde de mesure par rapport à l'objet à mesurer s'effectue avec un dispositif qui détermine la distance avec un capteur à ultrasons ou avec un capteur de pression de retenue.

11. Dispositif selon l'une quelconque des revendications 1 à 10, sur lequel la transmission de signaux de mesure et de commande partant de l'unité de mesure et allant à cette unité, modulée sur la tension d'alimentation, s'effectue par la ligne d'alimentation et/ou par des lignes de signalisation et/ou sans fil.

12. Dispositif selon l'une quelconque des revendications 1 à 11, sur lequel la transmission de l'alimentation électrique et/ou de signaux de mesure et de signaux de commande s'effectue à partir de l'unité de mesure mobile ou vers l'unité de mesure mobile en partie au moyen de contacts par frottement.
